# EUROPÄISCHE PATENTSCHRIFT

(11) **EP 1 890 904 B1**
(45) Veröffentlichungstag und Bekanntmachung des Hinweises auf die Patenterteilung: **21.04.2010**
(21) Anmeldenummer: 06742327.7
(22) Anmeldetag: 08.05.2006
(51) Int. Cl.: B60N 2/20, B60N 2/22, B60N 2/225

(54) **KRAFTFAHRZEUGSITZANORDNUNG**
MOTOR VEHICLE SEAT ARRANGEMENT
ENSEMBLE SIEGE AUTOMOBILE

(30) Priorität: 19.05.2005 DE 202005008272 U
(43) Veröffentlichungstag der Anmeldung: 27.02.2008
(73) Patentinhaber: Brose Fahrzeugteile GmbH & Co. KG, Coburg, 96450 Coburg (DE)
(72) Erfinder: QUAST, Ingo, 96450 Coburg (DE); HOFMANN, Jochen, 96257 Marktgraitz (DE)
(74) Vertreter: Baumgärtel, Gunnar
(86) Internationale Anmeldenummer: PCT/DE2006/000819
(87) Internationale Veröffentlichungsnummer: WO 2006/122521

(56) Entgegenhaltungen:
- WO-A-98/25785
- DE-A1- 1 755 421
- DE-A1- 2 022 193
- DE-A1- 10 057 723
- FR-A- 2 848 509
- US-A1- 2004 217 638

## Beschreibung

Die Erfindung betrifft eine Kraftfahrzeugsitzanordnung nach dem Oberbegriff des Anspruchs 1.

Eine Kraftfahrzeugsitzanordnung nach Anspruch 1 umfasst ein Sitzgestell; eine Rückenlehne, die einerseits in einem Gebrauchsbereich in verschiedene Gebrauchspositionen unterschiedlicher Lehnenneigung bringbar ist, in denen sie jeweils zum Abstützen des Rückens eines Sitzbenutzers dient, und die andererseits aus dem Gebrauchsbereich heraus in Richtung auf eine Sitzfläche des Sitzgestells vorklappbar ist; eine Verstelleinrichtung zur Einstellung der Lehnenneigung in dem Gebrauchsbereich, mit einem Exzenter, über den ein Verstellmoment zum Verstellen der Lehnenneigung in die Verstelleinrichtung einleitbar ist, und mit einer Taumelwelle, die einerseits derart (direkt oder indirekt über weitere Bauteile) mit dem Exzenter gekoppelt ist, dass sie bei Betätigung des Exzenters durch Einleitung eines Drehmomentes eine Taumelbewegung ausführt, und die andererseits derart mit der Rückenlehne gekoppelt ist, dass eine Taumelbewegung der Taumelwelle eine Verstellung der Lehnenneigung bewirkt; eine Längsführung, mittels der die Längsposition des Sitzgestells einstellbar ist; eine Feststellvorrichtung zum Arretieren der Längsführung in einer zuvor eingestellten Sitzlängsposition; einen Koppelmechanismus, über den die Feststellvorrichtung derart mit der Rückenlehne gekoppelt ist, dass bei einem Vorklappen der Rückenlehne auf die Sitzfläche die Feststellvorrichtung entriegelt wird; sowie ein Lehnenseitiges Betätigungselement des Koppelmechanismus, das auf der Taumelwelle oder einem mit der Taumelwelle verbundenen Element drehbar gelagert ist und das beim Vorklappen der Rückenlehne auf die Sitzfläche durch ein an der Rückenlehne vorgesehenes Auslöseelement, insbesondere in Form eines Anschlages, betätigt wird, um die Feststellvorrichtung zu entriegeln.

Eine derartige Anordnung an einem Kraftfahrzeugsitz wird als Einstiegshilfe oder "Easy-Entry-Mechanismus" bezeichnet, mit dem bei zweitürigen Kraftfahrzeugen das Einsteigen von Fahrzeuginsassen auf die hinteren Sitze eines Kraftfahrzeugs erleichtert werden kann. Hierzu wird bei einem mit einer Einstiegshilfe bzw. einem Easy-Entry-Mechanismus ausgerüsteten Vordersitz die Rückenlehne in Richtung auf die Sitzfläche vorgeklappt, wodurch die Feststellvorrichtung der Sitzlängsführung des entsprechenden Kraftfahrzeugsitzes entriegelt wird und der Kraftfahrzeugsitz in Sitzlängsrichtung in eine vorverlagerte Position verschoben werden kann, so dass Fahrzeuginsassen hinter diesem Sitz bequem in das Kraftfahrzeug einsteigen können.

Eine Kraftfahrzeugsitzanordnung mit Easy -Entry Funktion ist z.B. aus der DE 100 57 723 A1 bekannt. Dabei umfasst der Koppelmechanismus einen Bowdenzug, also ein in einer Bowdenhülle geführtes Zugmittel, über das das lehnenseitige Betätigungselement des Koppelmechanismus mit der Feststellvorrichtung in Verbindung steht. Durch Einwirkung eines lehnenseitigen Anschlages beim Vorklappen der Rückenlehne auf die Sitzfläche wird das durch einen Betätigungshebel gebildete lehnenseitige Betätigungselement um die aktuelle Taumelachse der Taumelwelle verschwenkt, wobei das Zugmittel des Bowdenzugs gestrafft und hierdurch die Feststellvorrichtung entriegelt wird. Hierbei besteht jedoch das Problem, dass die Lage des Betätigungshebels vor dem Vorklappen der Rückenlehne in Richtung auf die Sitzfläche von der jeweiligen Lage der Taumelwelle und damit der aktuellen Einstellung der Lehnenneigung im Gebrauchsbereich abhängt. Dies führt wiederum dazu, dass die Hebelverhältnisse bei Betätigung des Betätigungshebels durch Vorklappen der Rückenlehne von der aktuellen Einstellung der Lehnenneigung abhängen.

Weiterhin werden in DE-A-2022193 und DE-A-10057723 Gelenkbeschläge für Kraftfahrzeugsitzanordnungen beschrieben, die eine Neigungsverstellung einer Rückenlehne ermöglichen.

Der Erfindung liegt daher das Problem zugrunde, eine Kraftfahrzeugsitzanordnung der eingangs genannten Art dadurch zu verbessern, dass die Auslösung des Easy-Entry-Mechanismus möglichst weitgehend von der Einstellung der Lehnenneigung in ihrer Gebrauchsposition vor Ausübung der Easy-Entry-Funktion entkoppelt wird.

Erfindungsgemäß ist hierzu das Betätigungselement derart drehbar auf der Taumelwelle oder einem mit der Taumelwelle (drehfest) verbundenen Element gelagert, dass es zusätzlich begrenzt mit einer Bewegungskomponente in radialer Richtung bezüglich der Taumelwelle relativ zu dieser bewegbar ist, so dass das Betätigungselement beim Verschwenken um die Taumelwelle eine Zusatzbewegung mit einer Komponente in radialer Richtung bezüglich der Taumelwelle ausführen kann. Dabei ist am Sitzgestell ein Halteelement, insbesondere in Form eines Anschlages vorgesehen, das das Betätigungselement in einer definierten Position hält, wenn sich die Rückenlehne in einer ihrer Gebrauchspositionen befindet, wobei die Beweglichkeit des Betätigungselementes bezüglich der Taumelwelle in radialer Richtung genutzt wird, um unabhängig von der jeweiligen Lehnenneigung und damit der konkreten Einstellung der Taumelwelle das Betätigungselement in einer definierten Position, am sitzgestellseitigen Anschlag anliegend, halten zu können.

Durch die Beweglichkeit des Betätigungselementes in radialer Richtung bezüglich der Taumelwelle kann jenes Betätigungselement zur Auslösung der Easy-Entry-Funktion neben der Drehbewegung zusätzlich eine radiale Längsbewegung ausführen, bei der es zur Entriegelung der Feststellvorrichtung der Längsführung auf den zugeordneten Koppelmechanismus einwirkt. Aufgrund einer solchen zusätzlichen, definierten Längsbewegung des Betätigungselementes in radialer Richtung bezüglich der Taumelwelle kann unabhängig von der aktuellen Einstellung der Lehnenneigung im Gebrauchsbereich vor dem Vorklappen der Rückenlehne in Richtung auf die Sitzfläche und von dem Ausmaß einer hiermit verbundenen Schwenkbewegung des Betätigungselementes sichergestellt werden, dass die Einwirkung des Betätigungselementes auf den Koppelmechanismus eine zuverlässige Entriegelung der Feststellvorrichtung der Längsführung zu gewährleistet.

Das Betätigungselement ist hierbei begrenzt zwischen zwei Endpositionen, gebildet durch jeweils einen Anschlage relativ zu der Taumelwelle verschiebbar, und zwar insbesondere entlang einer zwischen den beiden Endpositionen erstreckten und durch ein Langloch gebildeten Führungsbahn. Die Führungsbahn ist bevorzugt an dem Betätigungselement ausgebildet und wird von der Taumelwelle oder einem hiermit (drehfest) verbundenen Element durchgriffen.

Dem an der Taumelwelle gelagerten und bezüglich dieser verschiebbaren Betätigungselement, insbesondere in Form eines Betätigungshebels, ist ein an der Rückenlehne angeordnetes Auslöseelement zugeordnet, das beim Vorklappen der Rückenlehne aus einer jeweiligen Gebrauchsposition in Richtung auf die Sitzfläche nach Überschreiten eines definierten, von der Lehnenneigung in der jeweiligen Gebrauchsposition abhängigen Klappwinkels mit dem Betätigungselement in Eingriff tritt und dieses um die momentane Achse der Taumelwelle verschwenkt. Durch die Schwenkbewegung des Betätigungselementes wird der Koppelmechanismus in einen Zustand überführt, in dem er die der Sitzlängsführung des Kraftfahrzeugsitzes zugeordnete Feststellvorrichtung entriegelt, z. B. dadurch, dass ein dem Koppelmechanismus zugeordnetes (in einer Bowdenhülle geführtes) Zugmittel gestrafft wird, über das das Betätigungselement mit der Feststellvorrichtung in Verbindung steht.

Zur Auslösung der radialen Längsbewegung des Betätigungselementes beim Vorklappen der Rückenlehne, um eine zusätzliche Einwirkung auf den nachgeordneten Koppelmechanismus zu gewährleisten, kann dem Betätigungselement ein Anschlag zugeordnet sein, über den das Betätigungselement beim Verschwenken mit einer Steuerkurve derart gleitet, dass die gewünschte Bewegung des Betätigungselementes in radialer Richtung ausgelöst wird.

Das Halteelement kann gleichzeitig den Anschlag bilden, der bei einem Vorklappen der Rückenlehne und einer hiermit verbundenen Schwenkbewegung des Betätigungselementes (ausgelöst durch Einwirkung des Auslöseelementes auf das Betätigungselement) die radiale Bewegung des Betätigungselementes bewirkt. Hierzu sind die Steuerkurve des Betätigungselementes und das Halteelement derart bezüglich einander zuzuordnen, dass beim Vorklappen der Rückenlehne und dem hiermit verbundenen Verschwenken des Betätigungselementes dessen Steuerkurve entlang dem durch das Halteelement gebildeten Anschlag gleitet, wodurch die radiale Längsbewegung des Betätigungselementes - zusätzlich zu dessen Drehbewegung - bewirkt wird.

Bei nicht vorgeklappter Rückenlehne, also in einer Gebrauchsposition befindlichen Rückenlehne, ist das Betätigungselement bevorzugt gegen das sitzgestellseitige Halteelement vorgespannt. Die hierfür erforderliche Vorspannung kann beispielsweise vorteilhaft durch das Zugmittel des Koppelmechanismus aufgebracht werden, über das das Betätigungselement mit der Feststellvorrichtung der Sitzlängsführung verbunden ist. D. h., bei nicht vorgeklappter Rückenlehne bewirkt der Koppelmechanismus selbst, dass das schwenkbar um die Taumelwelle gelagerte Betätigungselement des Koppelmechanismus an einem zugeordneten Haltelement (insbesondere in Form eines Anschlages) in einer definierten Position gehalten wird. Diese Position ist unabhängig von der aktuellen Neigungseinstellung der Rückenlehne in ihrem Gebrauchsbereich, da ja die zusätzliche Bewegbarkeit des Betätigungselementes bezüglich der Taumelwelle in radialer Richtung eine Ausgleichsbewegung des Betätigungselementes ermöglicht, so dass dieses unabhängig von der Neigung der Rückenlehne in ihrem Gebrauchsbereich und somit unabhängig von der aktuellen Lage der Taumelwelle stets in ein und derselben Position am zugeordneten Haltelement definiert gehalten werden kann.

Erst durch das Vorklappen der Rückenlehne in Richtung auf die Sitzfläche des Sitzgestells, wobei das an der Rückenlehne vorgesehene Auslöseelement auf das Betätigungselement einwirkt, wird dieses unter der Einwirkung des Auslöseelementes entlang hierfür geeigneten Richtung mit dem zugeordneten Halteelement außer Eingriff gebracht. Hierbei wird das Betätigungselement derart verschwenkt und gleichzeitig derart in radialer Richtung bezüglich der Taumelwelle bewegt, dass das Zugmittel des Koppelmechanismus gestrafft wird und derart auf die Feststellvorrichtung der Sitzlängsführung einwirkt, das diese entriegelt.

Weitere Einzelheiten und Vorteile der Erfindung werden bei der nachfolgenden Beschreibung eines Ausführungsbeispieles anhand der Figuren deutlich werden.

Es zeigen:
- Fig. 1: eine perspektivische Darstellung der Kopplung einer Rückenlehne einerseits an ein Sitzuntergestell eines Kraftfahrzeugsitzes und andererseits an einen Easy-Entry-Mechanismus eines Kraftfahrzeugsitzes;
- Fig. 2: die Anordnung aus Figur 1 beim Vorklappen der Rückenlehne in Richtung auf eine Sitzfläche des Kraftfahrzeugsitzes zur Auslösung der Easy-Entry- Funktion;
- Fig. 3: eine Darstellung der Anordnung aus Figur 1 nach dem Vorklappen der Rückenlehne in Richtung auf eine Sitzfläche des Kraftfahrzeugsitzes zur Auslösung der Easy-Entry-Funktion;
- Fig. 4: eine schematische Darstellung eines Kraftfahrzeugsitzes mit einer schwenkbar gelagerten Rückenlehne, die zusätzlich in Richtung auf eine Sitzfläche des Kraftfahrzeugsitzes vorklappbar ist.

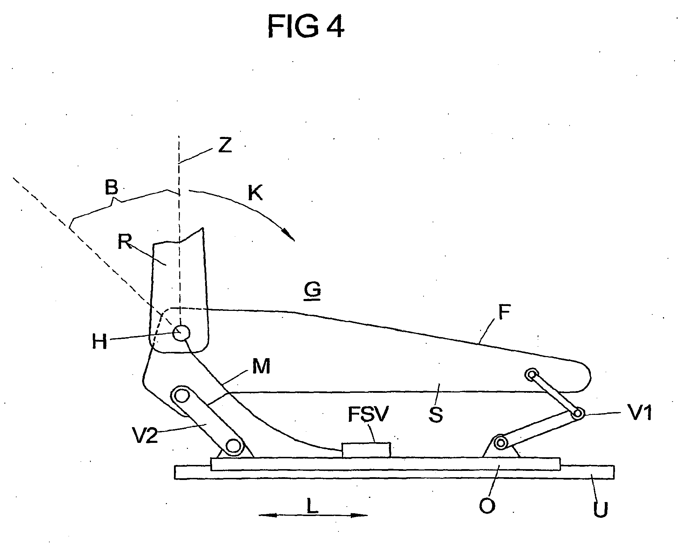

Das in Figur 4 in einer Seitenansicht schematisch dargestellte Sitzgestell G umfasst eine Sitzschiene O (Oberschiene), die in Sitzlängsrichtung L beweglich auf einer an der Fahrzeugkarosserie zu befestigenden Unterschiene U lagert, und ein Sitzseitenteil S, das über vordere und hintere Verstellhebel V1, V2 höhenverstellbar an der Sitzschiene O angelenkt ist. Auf seiner anderen, in Figur 4 nicht erkennbaren Längsseite weist das Sitzgestell G eine entsprechende Anordnung auf. Zwischen den beiden Sitzseitenteilen S des Sitzgestells G erstreckt sich eine Sitzfläche F, die ein Sitzpolster aufnimmt, auf den ein Fahrzeuginsasse Platz nehmen kann. Die Sitzseitenteile S bilden somit ein Sitzuntergestell des Kraftfahrzeugsitzes.

An den Sitzseitenteilen S des Sitzgestells G ist schwenkbar eine Rückenlehne R gelagert, deren Lehnenneigung mittels eines Handhebels H in einem Gebrauchsbereich B hinsichtlich ihrer Neigung zu einer Bezugsachse (vertikale Fahrzeugachse z) einstellbar ist. Hierbei handelt es sich um eine Komfortfunktion, mit der eine für einen jeweiligen Sitzbenutzer angenehme Lehnenneigung eingestellt werden kann, so dass er sich mit seinem Rücken an der Rückenlehne R abstützen kann.

Wird ein derartiger in Sitzlängsrichtung L verstellbarer Fahrzeugsitz als Vordersitz für ein zweitüriges Kraftfahrzeug verwendet, so ist es bekannt, zur Erleichterung des Einstiegs in den Fond des Kraftfahrzeugs die Rückenlehne R über einen Koppelmechanismus M an die Sitzlängsverstellung zu koppeln und zwar derart, dass bei einem Vorklappen der Rückenlehne R in einer Klapprichtung K auf die Sitzfläche F eine der Sitzlängsführung O, U zugeordnete, in Figur 4 schematisch angedeutete Feststellvorrichtung FSV entriegelt wird und der Sitz mit vorgeklappter Rückenlehne R vorgeschoben werden kann. Es handelt sich hierbei um eine so genannte Einstiegshilfe oder Easy-Entry-Funktion, die den Einstieg auf einen der Rücksitze eines zweitürigen Kraftfahrzeugs erleichtern soll.

Für weitere Einzelheiten des bekannten Aufbaus eines Kraftfahrzeugsitzes mit Easy-Entry-Funktion wird beispielhaft auf die DE 100 57 721 A1 verwiesen, wobei diese Druckschrift insbesondere auch Einzelheiten hinsichtlich der Verbindung zwischen dem Koppelmechanismus und der Feststellvorrichtung enthält. Hinsichtlich einer bekannten Verbindung des Koppelmechanismus mit der Rückenlehne, so dass beim Vorklappen der Rückenlehne der Koppelmechanismus zum Entriegeln der Feststellvorrichtung aktiviert wird, sei auf die DE 100 57 723 A1 verwiesen.

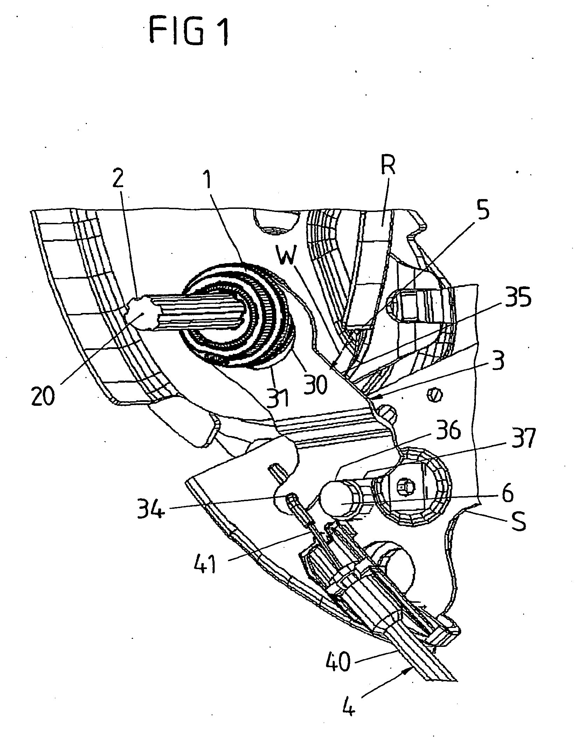

Nachfolgend wird anhand der Figuren 1 bis 3 an einem Ausführungsbeispiel der Erfindung eine vorteilhafte Verbindung des Koppelmechanismus M mit der Rückenlehne R dargestellt, so dass beim Vorklappen der Rückenlehne R auf die Sitzfläche F die Feststellvorrichtung FSV entriegelt werden kann.

Figur 1 zeigt den unteren Abschnitt der Rückenlehne R eines Kraftfahrzeugsitzes der in Figur 4 dargestellten Art sowie einen Abschnitt eines der das Sitzuntergestell bildenden Sitzseitenteile S, an denen die Rückenlehne R schwenkbar angelenkt ist. Das Sitzseitenteil S und die Rückenlehne R werden dabei in Figur 1 von der in Figur nicht erkennbaren Rückseite (also dem Inneren des entsprechenden Fahrzeugsitzes her) betrachtet, so dass das zur Einstellung der Rückenlehne vorgesehene, in Figur 4 gezeigte Handrad H nicht sichtbar ist.

Dafür ist in Figur 1 ein vom Handrad angetriebener Exzenter 1 erkennbar, an dem eine Taumelwelle 2 derart exzentrisch angeordnet ist, dass bei Betätigung des Handrades H und hiermit verbundener Einwirkung auf den Exzenter 1 die Taumelwelle 2 eine Taumelbewegung durchführt, bei der sich die Lage der Längsachse 20 der Taumelwelle kontinuierlich ändert. Der Exzenter 1 dient also zur exzentrischen Lagerung der Taumelwelle 2 und kann hierfür durchaus eine regelmäßige, z.B. kreisrunde, äußere Kontur aufweisen. Von Bedeutung ist allein die exzentrische Anordnung der Taumelwelle 2 am Exzenter 1, so dass jene bei Betätigung (Drehung) des Exzenters 1 eine Taumelbewegung ausführt. Die Rückenlehne R ist in bekannter Weise derart mit der Taumelwelle 2 fest verbunden, dass bei Krafteinleitung in den Exzenter 1 über das in Figur 4 dargestellte Handrad H eine Schwenkbewegung der Rückenlehne R erzeugt wird, so dass sich deren Neigung in dem in Figur 4 gezeigten Gebrauchsbereich B einstellen lässt.

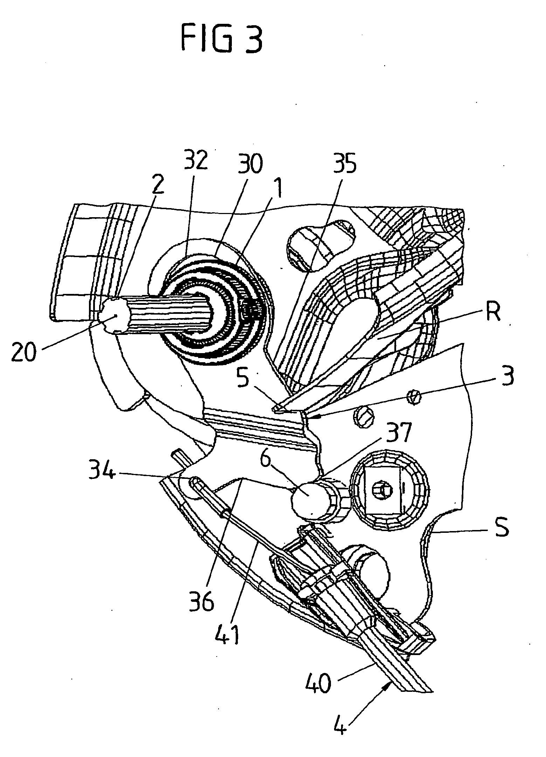

Vorliegend ist auf der Taumelwelle 2 der Verstelleinrichtung H, 1, 2 der Rückenlehne R ein Betätigungselement in Form eines Betätigungshebels 3 schwenkbar gelagert, indem die Taumelwelle 2 mit dem Exzenter 1 ein an dem Betätigungshebel 3 zwischen zwei Endabschnitten 31, 32 erstrecktes Langloch 30 durchgreift. Der Betätigungshebel 3 ist also nicht unmitelbar auf der Taumelwelle 2 gelagert, sondern vielmehr auf dem Exzenter 1. Hierdurch lässt sich der Betätigungshebel 3 bezüglich der Taumelwelle 2 begrenzt in radialer Richtung bezogen auf die Mittelachse 20 der Taumelwelle 2 verschieben, indem die Taumelwelle 2 innerhalb des Langlochs 30 jede beliebige Position zwischen den beiden Endanschlägen 31, 32 (siehe auch Figur 3) des Langloches 30 einnehmen kann.

An seinem vom Langloch 30 beabstandeten Ende weist der Betätigungshebel 3 eine Befestigungsstelle 34 in Form einer Befestigungsöffnung auf, an der ein Endabschnitt eines in einer Bowdenhülle 40 geführten Zugmittels 41 befestigt ist, über das die Rückenlehne R in bekannter Weise mit einem Entriegelungsmechanismus der Feststellvorrichtung FSV der Längsführung O, U des Kraftfahrzeugsitzes verbunden ist, vergleiche z. B. DE 100 57 721, in der die Kopplung eines Bowdenzugs mit einem Entriegelungsmechanismus einer Feststellvorrichtung der Sitzlängsführung eines Kraftfahrzeugsitzes beschrieben ist. Zusammenfassend bilden das Zugmittel 41 und die zugeordnete Bowdenhülle 40 eine Bowdenzug 4, der der Entriegelung der Feststellvorrichtung einer Sitzlängsführung bei einem Verschwenken des Entriegelungshebels 3 um die Taumelwelle 2 dient.

Eine solche Schwenkbewegung kann durch Vorklappen der Rückenlehne R in Richtung auf die Sitzfläche des zugehörigen Kraftfahrzeugsitzes eingeleitet werden, wobei ein an der Rückenlehne R vorgesehenes Auslöseelement 5 in Form eines Anschlages nach einem definierten Schwenkweg bzw. Schwenkwinkel W mit einer zugeordneten Anschlagsfläche 35 des Betätigungselementes 3 in Eingriff tritt.

In dem in Figur 1 dargestellten Zustand jedoch, der einer der Gebrauchspositionen der Rückenlehne R aus dem in Figur 4 gezeigten Gebrauchsbereich B entspricht, ist der Betätigungshebel 3 über eine Stützfläche 36 an einem Halteelement in Form eines sitzgestellseitigen, an dem einen Sitzseitenteil S vorgesehenen Stützanschlages 6 abgestützt. Hierdurch befindet sich der Betätigungshebel 3 in einer definierten Lage, in der er keine Zugkräfte auf das Zugmittel 41 des Bowdenzugs 4 ausübt, die zu einer Entriegelung des Feststellmechanismus der Sitzlängsführung führen könnten. Der Stützanschlag 6 ist dabei derart am Sitzgestell angeordnet und die zugeordnete Stützfläche 36 am Betätigungshebel 3 derart angeordnet und ausgebildet, dass am Zugmittel 41 des Bowdenzugs 4 wirkende Zugkräfte die Tendenz haben, den Betätigungshebel 3 mit seiner Stützfläche 36 gegen den Stützanschlag 6 zu verspannen und hierdurch den Betätigungshebel 3 in seiner definierten, in Figur 1 gezeigten Lage zu halten.

Hierbei ist ferner von Bedeutung, dass der Betätigungshebel 3 die in Figur 1 gezeigte, definierte Schwenklage unabhängig von der jeweiligen Lage der Taumelwelle 2, welche von der Einstellung der Lehnenneigung abhängt, einnehmen kann. Dies wird erreicht durch die Lagerung des Betätigungshebels 3 auf der nicht taumelnden äußeren Kontur des Exzenters 1. Hierdurch hat die Taumelbewegung der Taumelwelle 2 bei einer Einstellung der Lehnenneigung im Gebrauchsbereich keinen Einfluss auf die Schwenklage des Betätigungshebels 3; der Exzenter 1 kompensiert sozusagen diese Taumelbewegung, so dass der Betätigungshebel 3 in einer definierten Schenklage verbleibt. Es erfolgt also insoweit eine Entkopplung des Easy-Entry-Mechanismus, der beim Vorklappen der Rückenlehne R auf die Sitzfläche des Sitzgestells zu einer Entriegelung der Feststellvorrichtung FSV der Sitzlängsführung führt, von der Einstelleinrichtung H, 1, 2 (vergleiche Figuren 1 und 4), mittels derer die Rückenlehne R in ihrem Gebrauchsbereich B einstellbar ist.

Der Betätigungshebel 3 muss hierzu mit dem Langloch 30 nicht unmittelbar auf der Taumelwelle 2 angeordnet sein, sondern er kann auch auf einem hierfür vorgesehenen Lagerabschnitt eines mit der Taumelwelle verbundenen Elementes, insbesondere des Exzenters 1 gelagert sein. Sowohl der Exzenter 1 als auch der Betätigungshebel 3 können in einfacher Weise bevorzugt aus Kunststoff bestehen.

Ein erster wichtiger Vorteil der Lagerung des Betätigungshebels 3 auf der Taumelwelle 2 in der Weise, dass der Betätigungshebel 3 und die Taumelwelle 2 eine Relativbewegung in radialer Richtung bezogen auf die Mittelachse 20 der Taumelwelle 2 durchführen können, besteht somit darin, dass die Effekte einer Einstellung der Lehnenneigung im Gebrauchsbereich B (vergleiche Figur 4) von der Lage des Betätigungshebels 3 bei in Gebrauchsposition befindlicher Rückenlehne R weitgehend entkoppelt sind. Es erfolgt also insoweit eine Entkopplung des Easy-Entry-Mechanismus, der beim Vorklappen der Rückenlehne R auf die Sitzfläche des Sitzgestells zu einer Entriegelung der Feststellvorrichtung FSV der Sitzlängsführung führt, von der Einstelleinrichtung H, 1, 2 (vergleiche Figuren 1 und 4), mittels derer die Rückenlehne R in ihrem Gebrauchsbereich B einstellbar ist.

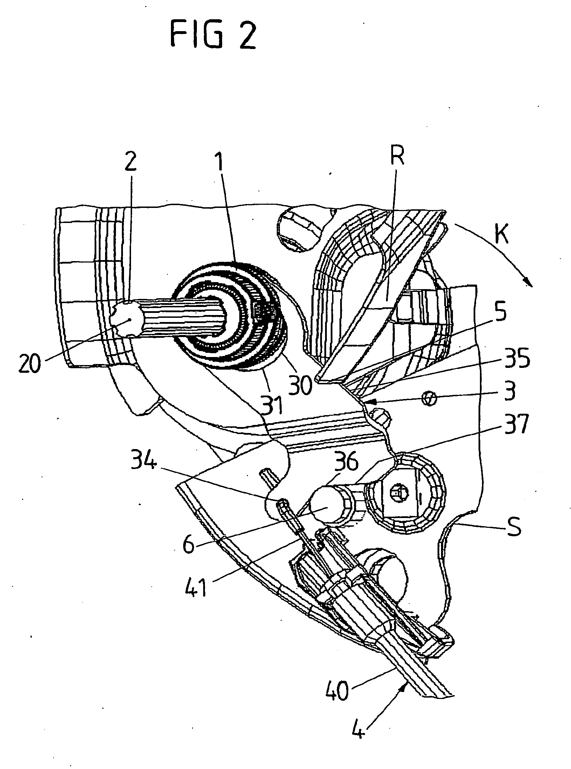

Wird die Rückenlehne R entsprechend Figur 2 entlang einer Klapprichtung K in Richtung auf die Sitzfläche des Sitzgestells vorgeklappt, um die Easy-Entry-Funktion auszulösen, so gerät das hierfür vorgesehene Auslöseelement in Form eines Anschlages 5 der Rückenlehne R nach einem Schwenkweg bzw. Schwenkwinkel W (vergleiche Figur 1), der von der Lehnenneigung vor Beginn der Ausübung der Easy-Entry-Funktion abhängt, mit einer zugeordneten Anschlagsfläche 35 des Betätigungshebels 3 in Anschlag. Die Entkopplung des Easy-Entry-Mechanismus von der Verstelleinrichtung H, 1, 2 zur Einstellung der Lehnenneigung im Gebrauchsbereich B (vergleiche Figur 4) ist also insofern nicht vollständig, als der Schwenkweg bzw. Schwenkwinkel W, den die Rückenlehne R beim Vorklappen in Richtung auf die Sitzfläche des Sitzgestells zurücklegen muss, bis die Easy-Entry-Funktion durch Auftreffen des hierfür vorgesehenen rückenlehnenseitigen Anschlags 5 auf die zugeordnete Anschlagsfläche 35 ausgelöst wird, von der Lehnenneigung (in der Gebrauchsposition der Rückenlehen R) im Gebrauchsbereich B am Beginn der Klappbewegung K abhängt.

Beim weiteren Vorklappen der Rückenlehne R in Richtung auf die Sitzfläche des Sitzgestells, wie in Figur 3 dargestellt, wobei die Rückenlehne R über ihr durch einen Anschlag 5 gebildetes Auslöseelement auf eine zugeordnete Anschlagsfläche 35 des Betätigungshebels 3 einwirkt, wird dieser derart verschwenkt, dass dessen Stützfläche 36 mit dem zugeordneten, sitzgestellseitigen Stützanschlag 6 außer Eingriff gerät und eine an die Stützfläche 36 anschließende, nockenartige Steuerkurve 37 des Betätigungshebels 3 entlang des Stützanschlages 6 gleitet. Hierdurch wird eine Längsbewegung des Betätigungshebels 3 bezüglich der Taumelwelle 2 in radialer Richtung ausgelöst, ermöglicht durch die Lagerung des Betätigungshebels 3 auf dem Exzenter 1 mittels eines Langloches 30. Denn bei der Bewegung des Betätigungshebels 3 in radialer Richtung bezüglich der Trommelwelle 2 verschiebt sich die Lage des Exzenters 1 innerhalb des Langloches 30.

Durch die beschriebene kombinierte Schwenk- und Längsbewegung des Betätigungselementes 3 wird eine Zugkraft auf das an der Befestigungsöffnung 34 des Betätigungselementes 3 befestigte Zugmittel 41 des mit dem Entriegelungsmechanismus der Feststellvorrichtung gekoppelten Bowdenzugs 4 ausgeübt. Die hiermit verbundene Relativbewegung des Zugmittels 41 bezüglich der Bowdenhülle 40 des Bowdenzugs 4 führt zu der für die Entriegelung der Feststellvorrichtung FSV (vergl. Fig. 4) erforderlichen Einwirkung auf deren Entriegelungsmechanismus.

In diesem Zusammenhang ist insbesondere von Bedeutung, dass durch die kombinierte Schwenk- und Längsbewegung des Betätigungshebels 3 während der Einwirkung des rückenlehnenseitigen Anschlages 5 beim Vorklappen der Rückenlehne R das am Betätigungshebel 3 eingehängte Ende des Zugmittels 41 des Bowdenzugs 4 zusätzlich zu dem Weg, der auf der reinen Schwenkbewegung des Betätigungshebels 3 beruht, einen zusätzlichen Weg in Straffrichtung SR zurücklegt, der durch das Zusammenwirken der Steuerkurve 37 des Betätigungshebels 3 mit dem Stützanschlag 6 sowie durch die hiermit verbundene Verschiebung des Steuerhebels 3 bezüglich der Taumelwelle 2, ermöglicht durch das Langloch 30 des Betätigungshebels 3, gegeben ist. Das Langloch 30 und die Steuerkurve 37 des Betätigungshebels 3 sowie der Stützanschlag 6 können dabei derart ausgelegt und so zueinander angeordnet werden, dass allein schon die translatorische Bewegung des Betätigungshebels 3 zu einer erheblichen Straffung des Zeugmittels 41 in Straffrichtung SR führt, welche wiederum die Entriegelung der Feststellvorrichtung der Sitzlängsverstellung zur Folge hat, um die Easy-Entry-Funktion auslösen zu können. Hiermit lässt sich eine zuverlässige Entriegelung der Feststellvorrichtung auch dann erreichen, wenn die allein durch die Schwenkbewegung des Steuerhebels 3 beim Vorklappen der Rückenlehne R erzeugte Straffung des Zugmittels 41 für eine Entriegelung der Feststellvorrichtung noch nicht genügen sollte.

In dem durch Vorklappen der Rückenlehne R auf die Sitzfläche des Sitzgestells erzeugten entriegelten Zustand der Feststellvorrichtung FSV, welche über den Bowdenzug 4 und dem Betätigungshebel 3 mit der Rückenlehne R gekoppelt ist, lässt sich der Fahrzeugsitz dann in Fahrzeuglängsrichtung L (vergleiche Figur 4) in eine vorverlagerte Position verschieben, um den Einstieg von Insassen hinter dem entsprechenden Fahrzeugsitz zu erleichtern. Dabei muss das Vorklappen der Rückenlehne R auf die Sitzfläche F des Sitzgestells G alleine noch nicht ausreichend sein, um Entriegelung der Feststellvorrichtung zu bewirken. Gegebenenfalls kann zusätzlich zu dem Vorklappen der Rückenlehne R eine ergänzende Maßnahme notwndig sein, wie z.B. die Betätigung eines an der Rückenlehne R vorgesehenen Betätigungselementes (Lehnenhebel).

Bei einem späteren erneuten Hochklappen der Rückenlehne R in eine Gebrauchsposition - nach dem Zurückfahren des Sitzes in seine vorherige Position - kann der Betätigungshebel 3 dann wieder genau in die in Figur 1 dargestellte Ausgangslage zurückgeführt werden, wobei die Lagerung des Betätigungshebels 3 bezüglich der Taumelwelle 2 auf dem Exzenter 1 sowie das Abstützen des Betätigungshebels 3 mit seiner Stützfläche 36 am Stützanschlag 6 genutzt wird.

## Patentansprüche

1. Kraftfahrzeugsitzanordnung mit
- einem Sitzgestell (G),
- einer Rückenlehne (R), die einerseits in einem Gebrauchsbereich in verschiedene Gebrauchspositionen unterschiedlicher Lehnenneigung bringbar ist, in denen sie zum Abstützen des Rückens eines Sitzbenutzers dient, und die andererseits aus dem Gebrauchsbereich heraus in Richtung auf eine Sitzfläche des Sitzgestells (G) vorklappbar ist,
- einer Längsführung (O), mittels der eine Längsposition des Sitzgestells einstellbar ist, **gekennzeichnet durch**
- eine Verstelleinrichtung (H) zur Einstellung der Lehnenneigung in dem Gebrauchsbereich,
- einen Exzenter (1) der Verstelleinrichtung, über den ein Verstellmoment zum Verstellen der Lehnenneigung in die Verstelleinrichtung (H) einleitbar ist,
- eine Taumelwelle (2), die einerseits derart mit dem Exzenter (1) gekoppelt ist, dass sie bei Betätigung des Exzenters (1) **durch** Einleitung eines Drehmomentes eine Taumelbewegung ausführt, und die andererseits derart mit der Rückenlehne (R) gekoppelt ist, dass eine Taumelbewegung der Taumelwelle (2) eine Verstellung der Lehnenneigung bewirkt,
- eine Feststellvorrichtung (FSV) zum Arretieren der Längsführung (O) in einer zuvor eingestellten Sitzlängspösition,
- einen Koppelmechanismus (M), über den die Feststellvorrichtung (FSV) derart mit der Rückenlehne (R) gekoppelt ist, dass bei einem Vorklappen der Rückenlehne (R) auf die Sitzfläche (F) die Feststellvorrichtung entriegelt werden kann,
- ein lehnenseitiges Betätigungselement (3) des Koppelmechanismus (M), das bezüglich der Taumelwelle (2) drehbar gelagert ist und das beim Vorklappen der Rückenlehne (R) auf die Sitzfläche (F) **durch** ein an der Rückenlehne (R) vorgesehenes Auslöseelement (5) betätigt wird, um die Feststellvorrichtung (FSV) zu entriegeln, wobei
das Betätigungselement (3) derart bezüglich der Taumelwelle (2) gelagert ist,
dass die Taumelwelle (2) und das Betätigungselement (3) zusätzlich mit einer Bewegungskomponente in radialer Richtung bezogen auf die Taumelwelle (2) relativ zueinander bewegbar sind, wobei am Sitzgestell (G) ein Halteelement (6) vorgesehen ist, das das Betätigungselement (3) in einer definierten Lage hält und einem Verschwenken des Betätigungselementes (3) entgegenwirkt, wenn sich die Rückenlehne (R) im Gebrauchsbereich (B) befindet.

2. Kraftfahrzeugsitzanordnung nach Anspruch 1, **dadurch gekennzeichnet, dass** die Taumelwelle (2) und das Betätigungselement (3) mit einer radialen Komponente bezüglich der Taumelwelle (2) zwischen zwei Endpositionen (31, 32) zueinander bewegbar sind.

3. Kraftfahrzeugsitzanordnung nach Anspruch 2, **dadurch gekennzeichnet, dass** die beiden Endpositionen (31, 32) durch jeweils einen Anschlag definiert werden, der die Beweglichkeit der Taumelwelle (2) und des Betätigungselementes (3) zueinander begrenzt.

4. Kraftfahrzeugsitzanordnung nach einem der vorhergehenden Ansprüche, **dadurch gekennzeichnet, dass** die Taumelwelle (2) und das Betätigungselement (3) entlang einer Führungsbahn (30) relativ zueinander bewegbar sind.

5. Kraftfahrzeugsitzanordnung nach Anspruch 3 und 4, **dadurch gekennzeichnet, dass** die Taumelwelle (2) und das Betätigungselement (3) entlang der Führungsbahn (30) zwischen zwei Endanschlägen (31, 32) relativ zueinander bewegbar sind.

6. Kraftfahrzeugsitzanordnung nach Anspruch 4 oder 5, **dadurch gekennzeichnet, dass** die Führungsbahn (30) durch ein Langloch gebildet wird.

7. Kraftfahrzeugsitzanordnung nach einem der Ansprüche 4 bis 6, **dadurch gekennzeichnet, dass** die Führungsbahn (30) am Betätigungselement (3) vorgesehen ist.

8. Kraftfahrzeugsitzanordnung nach einem der vorhergehenden Ansprüche, **dadurch gekennzeichnet, dass** das Betätigungselement (3) auf der äußeren Kontur des Exzenters (1) gelagert ist.

9. Kraftfahrzeugsitzanordnung nach einem der Ansprüche 4 bis 7 und Anspruch 8, **dadurch gekennzeichnet, dass** das Betätigungselement (3) mit seiner Führungsbahn (30) auf der äußeren Kontur des Exzenters (1) gelagert ist.

10. Kraftfahrzeugsitzanordnung nach einem der vorhergehenden Ansprüche, **dadurch gekennzeichnet, dass** das Betätigungselement (3) durch einen schwenkbar gelagerten Betätigungshebel gebildet wird.

11. Kraftfahrzeugsitzanordnung nach einem der vorhergehenden Ansprüche, **dadurch gekennzeichnet, dass** das Auslöseelement (5) derart an der Rückenlehne (R) angeordnet ist, dass es beim Vorklappen der Rückenlehne (R) aus einer jeweiligen Gebrauchsposition in Richtung auf die Sitzfläche (F) nach Überschreiten eines definierten Klappwinkels (W) mit dem Betätigungselement (3) in Eingriff tritt und diesen bezüglich der Taumelwelle (2) verschwenkt.

12. Kraftfahrzeugsitzanordnung nach einem der vorhergehenden Ansprüche, **dadurch gekennzeichnet, dass** das Betätigungselement (3) unter Einwirkung seitens des an der Rückenlehne (R) vorgesehenen Auslöseelementes (5) beim Vorklappen der Rückenlehne (R) derart verschwenkt wird, dass es den Koppelmechanismus (M) in einen Zustand überführt, in dem dieser die Feststellvorrichtung (FSV) entriegelt.

13. Kraftfahrzeugsitzanordnung nach einem der vorhergehenden Ansprüche, **dadurch gekennzeichnet, dass** der Koppelmechanismus (M) ein Zugmittel (41) umfasst, über das das Betätigungselement (3) mit der Feststellvorrichtung (FSV) gekoppelt ist, so dass es zur Entriegelung der Feststellvorrichtung (FSV) auf diese einwirken kann.

14. Kraftfahrzeugsitzanordnung nach Anspruch 13, **dadurch gekennzeichnet, dass** das Zugmittel (41) beim Verschwenken des Betätigungselementes (3) durch Vorklappen der Rückenlehne (R) derart gestrafft wird, dass durch die vom Zugmittel (41) auf die Feststellvorrichtung (FSV) ausgeübte Zugkraft diese entriegelt wird.

15. Kraftfahrzeugsitzanordnung nach Anspruch 1, **dadurch gekennzeichnet, dass** das Halteelement (6) durch einen Anschlag gebildet wird, an dem sich das Betätigungselement (3) mit einer Stützfläche (36) abstützen kann.

16. Kraftfahrzeugsitzanordnung nach Anspruch 1 oder 15, **dadurch gekennzeichnet, dass** das Auslöseelement (5) beim Vorklappen der Rückenlehne (R) in Richtung auf die Sitzfläche (F) derart auf das Betätigungselement (3) einwirkt, dass dieses von dem Haltelement (6) gelöst wird.

17. Kraftfahrzeugsitzanordnung nach Anspruch 15 und 16, **dadurch gekennzeichnet, dass** das Betätigungselement (3) von dem das Halteelement (6) bildenden Anschlag weg oder an diesem vorbeigeführt wird.

18. Kraftfahrzeugsitzanordnung nach einem der vorhergehenden Ansprüche, **dadurch gekennzeichnet, dass** das Betätigungselement (3) gegen das Halteelement (6) vorgespannt ist.

19. Kraftfahrzeugsitzanordnung nach Anspruch 13 und 18, **dadurch gekennzeichnet, dass** das Betätigungselement (3) gegen das Halteelement (6) durch an dem Zugmittel (41) wirkende Zugkräfte verspannt ist.

20. Kraftfahrzeugsitzanordnung nach einem der vorhergehenden Ansprüche, **dadurch gekennzeichnet, dass** am Betätigungselementes (3) eine Steuerkurve (37) vorgesehen ist, die beim Verschwenken des Betätigungselement (3) während eines Vorklappens der Rückenlehne (R) entlang eines sitzgestellseitigen Stützanschlages (6) gleitet, wobei das Betätigungselement (3) in radialer Richtung bezüglich der Taumelwelle (2) verschoben wird.

21. Kraftfahrzeugsitzanordnung nach einem der Ansprüche 1 oder 16 bis 19 und Anspruch 20 **dadurch gekennzeichnet, dass** der Stützanschlag (6) durch das Halteelement (6) gebildet wird.

22. Kraftfahrzeugsitzanordnung nach einem der vorhergehenden Ansprüche, **dadurch gekennzeichnet, dass** der Exzenter (1) und/oder das Betätigungselement (3) aus Kunststoff bestehen.

## Claims

1. Motor vehicle seat arrangement comprising
- a seat frame (G),
- a backrest (R), which, on the one hand, in a range of use can be brought in different positions of use with differing backrest inclinations, in which it serves for supporting the back of a seat user, and which, on the other hand, can be folded forward from the range of use towards a seat surface of the seat frame (G),
- a longitudinal guiding (O) by means of which a longitudinal position of the seat frame is adjustable,
**characterized by**
- an adjustment device (H) for adjusting the backrest's inclination in the range of use,
- an eccentric (1) of the adjustment device via which an adjusting torque may be induced into the adjustment device (H) for adjusting the backrest's inclination,
- a wobble shaft (2) which, on the one hand, is coupled to the eccentric (1) in such a way that it carries out a wobble movement upon actuation of the eccentric (1) due to the introduction of a torque and which, on the other hand, is coupled to the backrest (R) in such a way that a wobble movement of the wobble shaft (2) results in an adjustment of the backrest's inclination,
- a locking device (FSV) for arresting the longitudinal guiding (O) in a longitudinal seat position previously set,
- a coupling mechanism (M) via which the locking device (FSV) is coupled with the backrest (R) in such a way that the locking device can be unlocked upon foward-folding of the backrest (R) onto the seat surface (F),
- an actuation element (3) of the coupling mechanism (M) at the side of the backrest, which actuation element is mounted pivotably with respect to the wobble shaft (2) und which is actuated by an activating element (5) provided at the backrest (R) upon forward-folding of the backrest (R) onto the seat surface (F) in order to unlock the locking device (FSV),
wherein the actuation element (3) is mounted with respect to the wobble shaft (2) in such a way that the wobble shaft (2) and the actuation element (3) are additionally movable relative to each other with a component of motion in radial direction with respect to the wobble shaft (2), wherein a holding element (6) is provided at the seat frame (G) which holding element holds the actuation element (3) in a defined position and counteracts a pivoting of the actuation element (3) when the backrest (R) is within the range of use (B).

2. Motor vehicle seat arrangement according to claim 1, **characterized in that** the wobble shaft (2) and the actuation element (3) are movable relative to each other with a radial component with respect to the wobble shaft (2) between two end positions (31, 32).

3. Motor vehicle seat arrangement according to claim 2, **characterized in that** the two end positions (31, 32) are respectively defined by a stop, which limits the movability of the wobble shaft (2) and the actuation element (2) relative to each other.

4. Motor vehicle seat arrangement according to any one of the preceding claims, **characterized in that** the wobble shaft (2) and the actuation element (3) are movable relative to each other along a guiding path (30).

5. Motor vehicle seat arrangement according to claim 3 and 4, **characterized in that** the wobble shaft (2) and the actuation element (3) are movable relative to each other along the guiding path (30) between two end stops (31, 32).

6. Motor vehicle seat arrangement according to claim 4 or 5, **characterized in that** the guiding path (30) is formed by an elongated hole.

7. Motor vehicle seat arrangement according to any one of the claims 4 to 6, **characterized in that** the guiding path (30) is provided at the actuation element (3).

8. Motor vehicle seat arrangement according to any one of the preceding claims, **characterized in that** the actuation element (3) is mounted on the outer contour of the eccentric (1).

9. Motor vehicle seat arrangement according to any one of the claims 4 to 7 and claim 8, **characterized in that** the actuation element (3) with its guiding path (30) is mounted on the outer contour of the eccentric (1).

10. Motor vehicle seat arrangement according to any one of the preceding claims, **characterized in that** the actuation element (3) is formed by an actuation lever being mounted pivotably.

11. Motor vehicle seat arrangement according to any one of the preceding claims, **characterized in that** the activating element (5) is arranged at the backrest (R) in such a way that it engages the actuation element (3) upon forward-folding of the backrest (R) from a respective position of use towards the seat surface (F) after exceeding a defined folding angle (W) and pivots it with respect to the wobble shaft (2).

12. Motor vehicle seat arrangement according to any one of the preceding claims, **characterized in that** the actuation element (3), under the effect of the activating element (5) provided at the backrest (R), is pivoted upon forward-folding of the backrest (R) in such a way that it switches the coupling mechanism (M) into a state in which it unlocks the locking device (FSV).

13. Motor vehicle seat arrangement according to any one of the preceding claims, **characterized in that** the coupling mechanism (M) comprises a pulling means (41) via which the actuation element (3) is coupled with the locking device (FSV), so that it can act on this for unlocking the locking device (FSV).

14. Motor vehicle seat arrangement according to claim 13, **characterized in that** the pulling means (41) is tightened during the pivoting of the actuation element (3) by forward-folding of the backrest (R) in such a way that it is unlocked by the tensile force which is applied from the pulling means (41) on the locking device (FSV).

15. Motor vehicle seat arrangement according to claim 1, **characterized in that** the holding element (6) is formed by a stop at which a supporting surface (36) of the actuation element (3) can be supported.

16. Motor vehicle seat arrangement according to claim 1 or 15, **characterized in that** the activating element (5) acts on the actuation element (3) during the forward-folding of the backrest (R) towards the seat surface (F) in such a way that it is released from the holding element (6).

17. Motor vehicle seat arrangement according to claim 15 and 16, **characterized in that** the actuation element (3) is moved away from or past the stop forming the holding element (6).

18. Motor vehicle seat arrangement according to any one of the preceding claims, **characterized in that** the actuation element (3) is prestressed against the holding element (6).

19. Motor vehicle seat arrangement according to claim 13 and 18, **characterized in that** the actuation element (3) is braced against the holding element (6) by tensile forces being effective at the pulling means (41).

20. Motor vehicle seat arrangement according to any one of the preceding claims, **characterized in that** a cam (37) is provided at the actuation element (3) which cam slides along a supporting stop (6) at the seat frame side upon pivoting of the actuation element (3) during a forward-folding of the backrest (R), the actuation element (3) being displaced in radial direction with respect to the wobble shaft (2).

21. Motor vehicle seat arrangement according to any one of the claims 1 or 16 to 19 and claim 20, **characterized in that** the supporting stop (6) is formed by the holding element (6).

22. Motor vehicle seat arrangement according to any one of the preceding claims, **characterized in that** the eccentric (1) and/or the actuation element (3) are made up of plastics.

## Revendications

1. Ensemble formant siège d'automobile, comprenant
- un châssis de siège (G),
- un dossier (R) qui peut être amené d'une part dans une plage d'utilisation dans diverses positions d'utilisation dans lesquelles le dossier présente des inclinaisons différentes dans lesquelles il sert à soutenir le dos d'un utilisateur du siège, et qui peut être d'autre part rabattu, partant de la plage d'utilisation, en direction d'une surface d'assise du châssis de sièges (G),
- un guidage longitudinal (O), au moyen duquel il est possible de régler une position longitudinale du châssis de siège,
**caractérisé par**
- un dispositif de réglage (H) pour le réglage de l'inclinaison du dossier dans la plage d'utilisation,
- un excentrique (1) du dispositif de réglage, au moyen duquel peut être appliqué un couple de réglage pour régler l'inclinaison du dossier dans le dispositif de réglage (H),
- un arbre basculant (2) qui est couplé d'une part à l'excentrique (1) de telle manière que lors de l'actionnement de l'excentrique (1) par application d'un couple de rotation il décrit un mouvement de basculement, et qui est couplé d'autre part au dossier (R) de telle manière qu'un mouvement de basculement de l'arbre basculant (2) provoque un réglage de l'inclinaison du dossier,
- un dispositif d'immobilisation (FSV) pour bloquer le guidage longitudinal (O) dans une position longitudinale de siège auparavant réglée,
- un mécanisme d'accouplement (M) via lequel le dispositif d'immobilisation (FSV) est couplé au dossier (R) de telle façon que lors d'un rabattement du dossier (R) sur la surface d'assise (F) le dispositif d'immobilisation peut être déverrouillé,
- un élément d'actionnement (3), côté dossier, du mécanisme d'accouplement (M), qui est monté rotatif par rapport à l'arbre basculant (2) et qui est actionné lors d'un rabattement du dossier (R) sur la surface d'assise (F) par un élément de déclenchement (5) prévu sur le dossier (R), pour déverrouiller le dispositif d'immobilisation (FSV), et dans lequel
l'élément d'actionnement (3) est monté par rapport à l'arbre basculant (2) de telle façon que l'arbre basculant (2) et l'élément d'actionnement (3) sont déplaçables l'un par rapport à l'autre en supplément avec une composante de mouvement en direction radiale par rapport à l'arbre basculant (2), et dans lequel un élément de maintien (6) est prévu sur le châssis de siège (G), qui maintient l'élément d'actionnement (3) dans une position définie et s'oppose à un pivotement de l'élément d'actionnement (3) quand le dossier (R) se trouve dans la plage d'utilisation (B).

2. Ensemble formant siège d'automobile selon la revendication 1, **caractérisé en ce que** l'arbre basculant (2) et l'élément d'actionnement (3) sont déplaçables l'un par rapport à l'autre entre deux positions finales (31, 32) avec une composante radiale par rapport à l'arbre basculant (2).

3. Ensemble formant siège d'automobile selon la revendication 2, **caractérisé en ce que** les deux positions finales (31, 32) sont définies chacune par une butée qui limite la mobilité de l'arbre basculant (2) et de l'élément d'actionnement (3) l'un par rapport à l'autre.

4. Ensemble formant siège d'automobile selon l'une des revendications précédentes, **caractérisé en ce que** l'arbre basculant (2) et l'élément d'actionnement (3) sont déplaçables l'un par rapport à l'autre le long d'une voie de guidage (30).

5. Ensemble formant siège d'automobile selon la revendication 3 et 4, **caractérisé en ce que** l'arbre basculant (2) et l'élément d'actionnement (3) sont déplaçables l'un par rapport à l'autre le long de la voie de guidage (30) entre deux butées finales (31, 32).

6. Ensemble formant siège d'automobile selon la revendication 4 ou 5, **caractérisé en ce que** la voie de guidage (30) est formée par un trou oblong.

7. Ensemble formant siège d'automobile selon l'une des revendications 4 à 6, **caractérisé en ce que** la voie de guidage (30) est prévue sur l'élément d'actionnement (3).

8. Ensemble formant siège d'automobile selon l'une des revendications précédentes, **caractérisé en ce que** l'élément d'actionnement (3) est monté sur le contour extérieur de l'excentrique (1).

9. Ensemble formant siège d'automobile selon l'une des revendications 4 à 7 et la revendication 8, **caractérisé en ce que** l'élément d'actionnement (3) est monté avec sa voie de guidage (30) sur le contour extérieur de l'excentrique (1).

10. Ensemble formant siège d'automobile selon l'une des revendications précédentes, **caractérisé en ce que** l'élément d'actionnement (3) est formé par un levier d'actionnement monté en pivotement.

11. Ensemble formant siège d'automobile selon l'une des revendications précédentes, **caractérisé en ce que** l'élément de déclenchement (5) est agencé sur le dossier (R) de telle façon que, lors du rabattement du dossier (R) en partant d'une position d'utilisation respective et en direction de la surface d'assise (F), il vient en engagement avec l'élément d'actionnement (3) après avoir dépassé un angle de pivotement défini (W), et fait pivoter celui-ci par rapport à l'arbre basculant (2).

12. Ensemble formant siège d'automobile selon l'une des revendications précédentes, **caractérisé en ce que** l'élément d'actionnement (3) est pivoté, sous l'action de l'élément de déclenchement (5) prévu sur le dossier (R), lors du rabattement du dossier (R) de telle manière qu'il déplace le mécanisme d'accouplement (M) dans une situation dans laquelle celui-ci déverrouille le dispositif d'immobilisation (FSV).

13. Ensemble formant siège d'automobile selon l'une des revendications précédentes, **caractérisé en ce que** le mécanisme d'accouplement (M) comprend un organe de traction (41) au moyen duquel l'élément d'actionnement (3) est couplé avec le dispositif d'immobilisation (FSV) de telle manière qu'il peut agir sur le dispositif d'immobilisation (FSV) lors du déverrouillage du dispositif d'immobilisation.

14. Ensemble formant siège d'automobile selon la revendication 13, **caractérisé en ce que** l'organe de traction (41) est mis en tension, lors du pivotement de l'élément d'actionnement (3) dû au basculement du dossier (R) vers l'avant, de telle manière que sous la force de traction exercée par l'organe de traction (41) sur le dispositif d'immobilisation (FSV) celui-ci est déverrouillé.

15. Ensemble formant siège d'automobile selon la revendication 1, **caractérisé en ce que** l'élément de maintien (6) est formé par une butée contre laquelle l'élément d'actionnement (3) peut s'appuyer avec une surface d'appui (36).

16. Ensemble formant siège d'automobile selon la revendication 1 ou 15, **caractérisé en ce que** l'élément de déclenchement (5) agit, lors du rabattement du dossier (R) en direction de la surface d'assise (F), sur l'élément d'actionnement (3) de telle manière que celui-ci est détaché de l'élément de maintien (6).

17. Ensemble formant siège d'automobile selon la revendication 15 et 16, **caractérisé en ce que** l'élément d'actionnement (3) est guidé en éloignement de la butée formée sur l'élément de maintien (6), ou bien guidé en passant devant celle-ci.

18. Ensemble formant siège d'automobile selon l'une des revendications précédentes, **caractérisé en ce que** l'élément d'actionnement (3) est précontraint contre l'élément de maintien (6).

19. Ensemble formant siège d'automobile selon les revendications 13 et 18, **caractérisé en ce que** l'élément d'actionnement (3) est précontraint contre l'élément de maintien (6), par des forces de traction agissant sur l'organe de traction (41).

20. Ensemble formant siège d'automobile selon l'une des revendications précédentes, **caractérisé en ce qu'**il est prévu sur l'élément d'actionnement (3), une came de commande (37) qui, lors d'un pivotement de l'élément d'actionnement (3) pendant le rabattement du dossier (R), coulisse le long d'une butée d'appui (6) du côté du châssis de siège, et l'élément d'actionnement (3) étant déplacé en direction radiale par rapport à l'arbre basculant (2).

21. Ensemble formant siège d'automobile selon l'une des revendications 1 ou 15 à 19 et revendication 20, **caractérisé en ce que** la butée d'appui (6) est formée par l'élément de maintien (6).

22. Ensemble formant siège d'automobile selon l'une des revendications précédentes, **caractérisé en ce que** l'excentrique (1) et/ou l'élément d'actionnement (3) sont en matière plastique.
